# EUROPÄISCHE PATENTSCHRIFT

(11) **EP 1 375 960 B1**
(45) Veröffentlichungstag und Bekanntmachung des Hinweises auf die Patenterteilung: **10.09.2008**
(21) Anmeldenummer: 03003645.3
(22) Anmeldetag: 18.02.2003
(51) Int. Cl.: F16H 1/16

(54) **Getriebe-Antriebseinheit mit einem einen Sockel aufweisenden Zahnrad**
Drive unit with gear with a socket
Unité transmission-entraînement avec roue dentée à socle

(30) Priorität: 27.06.2002 DE 10228705
(43) Veröffentlichungstag der Anmeldung: 02.01.2004
(73) Patentinhaber: ROBERT BOSCH GMBH, 70442 Stuttgart (DE)
(72) Erfinder: Thoene, Holger, 76437 Rastatt (DE); Krauth, Marco, 76547 Sinzheim (DE); Keller, Hanspeter, 76199 Karlsruhe Rueppurr (DE)

(56) Entgegenhaltungen:
- DE-U1- 9 104 125

## Beschreibung

### Stand der Technik

Die Erfindung betrifft eine Getriebe-Antriebseinheit, insbesondere zum Verstellen von beweglichen Teilen im Kraftfahrzeug, mit einem Zahnrad, das einen Sockel aufweist nach der Gattung des Hauptanspruchs.

Mit dem GM 91 04 125 ist ein elektrisches Antriebsaggregat, beispielsweise für Schiebefenster bekannt geworden, bei dem ein Mitnehmer zwischen in einem Schneckenrad gelagerten Dämpfungsmittel eingreift. Der Mitnehmer weist eine Außenverzahnung auf, die mit einer Innenverzahnung beispielsweise einer Seiltrommel kämmt. Bei Aggregaten mit starken Antriebsmotoren kommt es mit steigenden Anforderungen an die Dauerlaufeigenschaften des Antriebs zu Ausfällen einer solchen Getriebe-Antriebseinheit durch die Zerstörung des Verzahnungsbereichs des Mitnehmers. Durch die wechselseitige Torsionsbelastung des Mitnehmers wird die Zahnanbindung im Fußauslaufbereich so stark beansprucht, dass die Verzahnung im Fußauslaufbereich abgeschert wird. Erschwerend kommt hinzu, dass die axiale Bauhöhe des Aggregats nicht erhöht werden darf, da beispielsweise für Anwendungen im Kraftfahrzeug nur ein begrenzter Bauraum zur Verfügung steht.

### Vorteile der Erfindung

Die erfindungsgemäße Vorrichtung mit den Merkmalen des Anspruchs 1 hat dem gegenüber den Vorteil, dass durch die Anformung einer axialen Vertiefung im Sockel des Zahnrads sich dessen Außenverzahnung axial über einen längeren Bereich erstreckt, ohne dass sich die gesamte bauaxiale Bauhöhe der Getriebe-Antriebseinheit erhöht. Innerhalb der Vertiefung steht nun Bauraum zur Verfügung, um den Fußauslaufbereich der Außenverzahnung so zu gestalten, dass die Scherwirkung zwischen der Außenverzahnung und dem Sockel verringert wird.

Durch die in den Unteransprüchen angegebenen Maßnahmen sind vorteilhafte Weiterbildungen der Vorrichtung nach Anspruch 1 möglich. Durch die Ausbildung einer Radienanbindung im Fußauslaufbereich der Verzahnung wird die Scherwirkung zwischen Verzahnung und Sockel deutlich reduziert und der effektive axiale Eingriffbereich der Verzahnung sogar noch verlängert, da sich der Fußauslaufbereich komplett in der Vertiefung des Sockels befindet.

Besonders günstig ist die Ausformung eines Radius in radialer Richtung, wozu die gesamte radiale Ausdehnung der Vertiefung genutzt werden kann. Alternativ oder zusätzlich erhöht auch das Anformen eines Radius in Umfangsrichtung zwischen den einzelnen Zähnen die mechanische Anbindung der Verzahnung. Von Vorteil ist die Ausbildung eines Radius der größer ist als die Zahntiefe, da dann ausghehend vom Kerndurchmesser der Außenverzahnung auch noch die Zahnspitzen am Außendurchmesser der Verzahnung abgestützt werden. Unabhängig von dem Radius ausgehend vom Kemdurchmesser kann auch ein weiterer Radius an den Zahnspitzen, ausgehend vom Außendurchmesser der Verzahnung angeformt werden. Die axiale und radiale Ausdehnung der Vertiefung im Sockel kann günstiger Weise so dimensioniert werden, dass der gesamte Verzahnungsbereich, der axial aus dem Sockel ragt, für einen effektiven Zahneingriff einer Innenverzahnung eines Abtriebelements zur Verfügung steht.

Durch das Ausformen einer Vertiefung im Sockel steht die zylindrische Mantelfläche des Sockels über dessen gesamte axiale Ausdehnung als Dichtfläche zur Verfügung. So kann beispielsweise am Umfang des Sockels eine umlaufende Dichtung eines Getriebegehäusedeckels anliegen, das das drehbare Zahnrad gegenüber dem Gehäuse staub- und wasserdicht abschließt.

Dazu ist es von Vorteil, das Zahnrad mit einer zentralen Bohrung auf einer gehäusefesten Achse drehbar zu lagern.

Gemäß einer vorteilhaften Ausführungsform ist das Zahnrad als Mitnehmer ausgebildet, dessen Ausformungen mit entsprechenden Gegenausformungen von Dämpfungsmitteln wechselwirken, die wiederum an einem Abtriebsrad beispielsweise eines Fensterheberantriebs angeordnet sind. Dadurch können schlagartige Drehmomentänderungen, die auf die Außenverzahnung einwirken, gedämpft werden.

Für das Verstellen von Fensterscheiben oder eines Schiebedachdeckels kämmt die Außenverzahnung mit einer Innenverzahnung eines Antriebselements der Verstellmimik, wobei vorteilhafter Weise die gesamte axiale Ausdehnung der Verzahnung, die über die axiale Sockelkante hinausreicht, genutzt werden kann. Der wirksame Eingriffbereich kann axial sogar noch verlängert werden, indem sich die Innenverzahnung des Antriebselements mit einem Fortsatz in die Vertiefung des Sockels erstreckt.

In einfacher Weise lässt sich das Zahnrad als Kunststoff-Spritzgussteil in einem einzigen Spritzvorgang fertigen und bedarf keiner weiteren Nachbearbeitung.

### Zeichnungen

In der Zeichnung sind zwei Ausführungsbeispiele einer erfindungsgemäßen Vorrichtung dargestellt und in der nachfolgenden Beschreibung näher erläutert. Es zeigen
Fig. 1 eine erfindungsgemäße Getriebe-Antriebseinheit im Schnitt,
Fig. 2 ein Zahnrad mit Sockel im Schnitt gemäß dem Stand der Technik und
Fig. 3 ein Zahnrad mit Sockel nach einem zweiten Ausführungsbeispiel einer erfindungsgemäßen Getriebeantriebsvorrichtung.

### Beschreibung

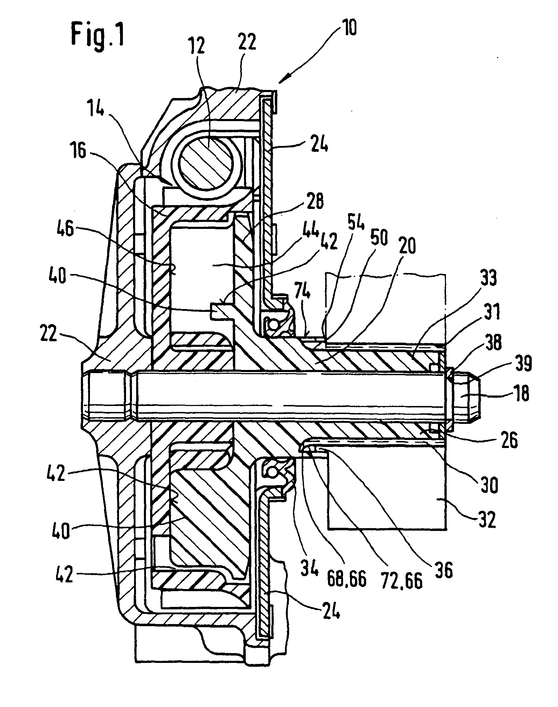

Eine in der Fig. 1 im Schnitt gezeigte Getriebe-Antriebseinheit 10, beispielsweise zum Verstellen von Kraftfahrzeug-Schiebefenstern, hat einen nicht näher dargestellten Antriebsmotor, dessen Abtriebswelle oder Ankerwellenverlängerung als Getriebeschnecke 12 ausgebildet ist, welche zu einem Schneckengetriebe 14 gehört. Die Getriebeschnecke 12 kämmt mit einem Schneckenrad 16. Das Schneckenrad 16 ist auf einer Achse 18 drehbar gelagert, welche mit ihrem einen Ende fest in einem Getriebegehäuse 22 gelagert ist, das das Schneckengetriebe 14 topfförmig umschließt. Ein Getriebedeckel 24, welcher die offene Seite des Getriebegehäuses 22 abschließt, ist von der Lagerachse 18 durchdrungen. Auf der Achse 18 ist des Weiteren ein Zahnrad 26 mit einem Sockel 20 gelagert, der innerhalb des Gehäuses 22 mit einem scheibenförmigen Mitnehmer 28 versehen ist. Das außerhalb des Getriebegehäuses 22 befindliche Zahnrad 26 weist eine Außenverzahnung 30 auf, die mit einer Innenverzahnung 31 eines Antriebselements 32 kämmt. Das Abtriebselement 32 ist im Ausführungsbeispiel als Seiltrommel 33 dargestellt, die beispielsweise eine Fensterscheibe zwischen zwei Endlagen verstellt. Zum Schutz gegen eindringenden Schmutz und Wasser ist die Durchdringungsstelle des Sockels 20 im Deckel 24 mit Hilfe eines Dichtelements 34 abgedichtet. Am freien Ende der Lagerachse 18 ist ein Sprengring 38 in einer Ringnut 39 verankert, so dass das Zahnrad 26 mit dem Sockel 20 gegenüber einer axialen Verschiebung gesichert ist. Im Ausführungsbeispiel ist das Zahnrad 26 zusammen mit dem Sockel 20 und dem Mitnehmer 28 einstückig als Kunststoff-Spritzgussteil ausgeführt, wobei der Mitnehmer 28 Ausformungen 40 aufweist, die in entsprechenden Gegenausformungen 42 von Dämpfelementen 44 greifen, die in taschenartigen Aufnahmen 46 des Schneckenrads 16 angeordnet sind. Durch die elastischen Eigenschaften der Dämpfelemente 44 kann sich der Mitnehmer 28 mit dem Zahnrad 26 gegenüber dem Schneckenrad 16 bis zu einem gewissen Maß verdrehen, wodurch schlagartige Drehmomentschwankungen, die auf das Zahnrad 20 wirken, gedämpft werden. Der zylinderförmige Sockel 20 weist eine axiale Vertiefung 50 auf, in die sich die Außenverzahnung 30 des Zahnrads 26 erstreckt. Die Seiltrommel 33 steht mit ihrer Innenverzahnung 31 über dem gesamten axialen Bereich 52 der von einer Fläche des Sockels 20 senkrecht zur Achse 18 begrenzt wird in Eingriff. In einer Variation des Ausführungsbeispiels ragt die Innenverzahnung 31 mittels eines axialen Fortsatzes 36 des Abtriebselements 32 in die Vertiefung 50 hinein, so dass der effektive axiale Verzahnungsbereich gegenüber dem Bereich 52 vergrößert wird.

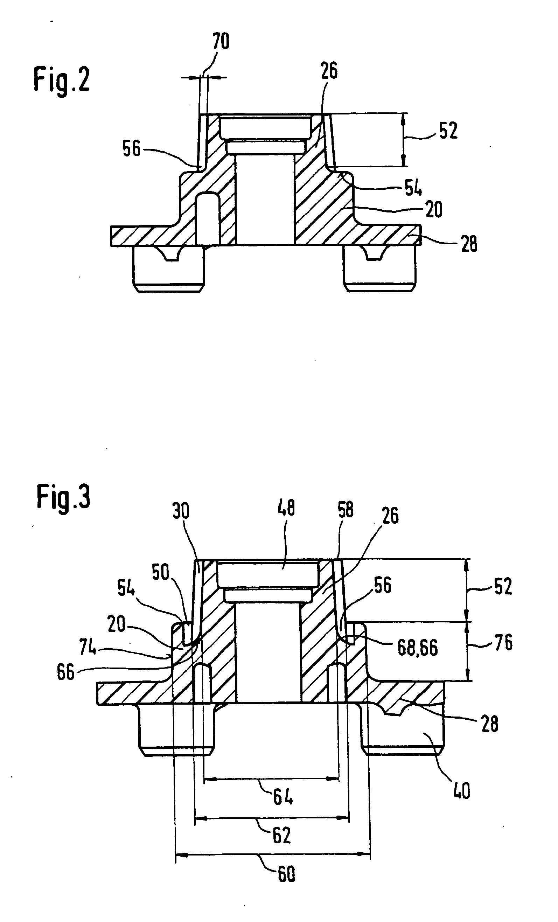

Fig. 2 zeigt ein Zahnrad 26 mit einem Sockel 20, das als ein Mitnehmerelement ausgebildet ist gemäß dem Stand der Technik. Das Zahnrad 26 weist eine zentrale Bohrung 48 auf, mit der dieses drehbar auf einer Achse 18 gelagert werden kann. Die Außenverzahnung 30 ist in dieser Ausführung leicht konisch ausgebildet und stößt in einem Fußauslaufsbereich gegen eine axiale Fläche 54 des Sockels 20, die näherungsweise senkrecht zur Achse 18 ausgerichtet ist. Im Fußauslauf 56 erzeugt ein angreifendes Torsionsmoment eine hohe Scherbelastung zwischen der Außenverzahnung 30 und dem Sockel 20.

Fig. 3 zeigt ein erfindungsgemäßes Zahnrad 26 mit Sockel 20 und Mitnehmer 28 mit denselben axialen und radialen Abmessungen wie das Mitnehmerelement aus Fig. 2. Der zylinderförmige Sockel 20 mit einem Außendurchmesser 60, der größer ist als der Außendurchmesser 62 der Außenverzahnung 30 weist nun eine ringförmige axiale Vertiefung 50 auf, in die hinein sich die Außenverzahnung 30 erstreckt. Im Fußauslauf 56 der Verzahnung 30 ist eine Radienanbindung 66 zwischen der Verzahnung 30 und dem Sockel 20 angeformt, die sich vollständig innerhalb der Vertiefung 50 befindet. Dadurch steht der gesamte Bereich 52 vom freien Ende 58 der Verzahnung 30 bis zur axialen Fläche 54 des Sockels 20 für einen effektiven Zahneingriff des Abtriebselements 32 zur Verfügung. Zur Radienanbindung 66 ist ausgehend vom Kerndurchmesser 64 der Verzahnung 30 am Fußauslauf 56 ein Radius 68 angeformt, der sich in radialer Richtung erstreckt und die mechanische Anbindung der Außenverzahnung 30 an den Sockel 20 verstärkt. Der Betrag des Radius 68 ist im Ausführungsbeispiel größer als die Zahntiefe 70 der Außenverzahnung 30 und erstreckt sich beispielsweise über die gesamte radiale Ausdehnung der Vertiefung 50. Des Weiteren ist auch ein Radius zwischen den Zähnen in Umfangsrichtung angeformt, dessen Betrag unabhängig vom Radius 68 festgelegt werden kann. Ebenso ist in einer Variation des Ausführungsbeispiels ausgehend vom Außendurchmesser 62 der Verzahnung 30 am Fußauslauf 56 ein weiterer Radius 72 angeformt, wie dies in Fig. 1 dargestellt ist, wobei der Radius 72 auch identisch mit dem Radius in Umfangsrichtung zwischen den einzelnen Zähnen ausgebildet sein kann. Der Sockel 20 weist eine radiale Außenfläche 74 auf, die beispielsweise als Zylindermantel ausgebildet ist und beispielsweise eine Dichtfläche darstellt, die mit einem Dichtelement 34 wechselwirkt. Die axiale Ausdehnung 76 des Sockels 20 bleibt gegenüber der Ausführung in Fig. 2 unverändert, obwohl die axiale Ausdehnung der Außenverzahnung 30 vergrößert, und die mechanische Anbindung der Verzahnung 30 am Fußauslauf 56 verstärkt wird. Daher ersetzt das erfindungsgemäße Mitnahmeelement nach Fig. 3 die in Fig. 2 dargestellte Ausführung, ohne dass sonstige Komponenten der Antriebseinheit 10, wie Gehäuse 22, Dichtung 34 oder Abtriebselement 32 angepasst werden müssten.

Die Erfindung ist nicht auf Mitnehmerelemente beschränkt, sondern kann auf alle Zahnradausführungen angewendet werden, die einen Sockel 20 mit einem größeren Außendurchmesser 60 als der der Außenverzahnung 30 des Zahnrads 26 aufweisen.

Die Erfindung umfasst in einem weiteren Ausführungsbeispiel auch die kinematische Umkehr der Verzahnung 30, wobei dann das Zahnrad 26 eine Innenverzahnung aufweist, deren Innendurchmesser größer ist als beispielsweise eine Nabe des Zahnrads 26, die nun dem Sockel 20 entspricht. Dabei ist zwischen der zentralen Bohrung 48 des Zahnrads 26 und der Innenverzahnung in die Nabe eine axiale Vertiefung 50 ausgeformt, in die hinein sich die Innenverzahnung erstreckt. Auch bei diesem Ausführungsbeispiel wird mittels einer Radienanbindung die mechanische Stabilität der Innenverzahnung gegenüber der Nabe erhöht, so dass ein Abscheren der Innenverzahnung verhindert wird.

## Patentansprüche

1. Getriebe-Antriebseinheit (10) - insbesondere zum Verstellen von beweglichen Teilen im Kraftfahrzeug - mit mindestens einem Zahnrad (26), das eine Außenverzahnung (30) und einen Sockel (20) aufweist, dessen Außendurchmesser (60) größer ist, als der Außendurchmesser (62) der Außenverzahnung (30), **dadurch gekennzeichnet, dass** der Sockel (20) eine umlaufende, axiale Vertiefung (50) aufweist, in die hinein sich die Außenverzahnung (30) erstreckt.

2. Getriebe-Antriebseinheit (10) nach Anspruch 1, **dadurch gekennzeichnet, dass** die Außenverzahnung (30) zum Sockel (20) hin einen Fußauslauf (56) bildet, der innerhalb der Vertiefung (50) eine Radienanbindung (66) zum Sockel (20) aufweist.

3. Getriebe-Antriebseinheit (10) nach einem der Ansprüche 1 oder 2, **dadurch gekennzeichnet, dass** die Radienanbindung (66) einen Radius (68, 72) aufweist, der sich in radialer und/oder in Umfangsrichtung erstreckt.

4. Getriebe-Antriebseinheit (10) nach einem der Ansprüche 1 bis 3, **dadurch gekennzeichnet, dass** der Radius (68, 72) größer ist, als die Zahnhöhe der Außenverzahnung (30).

5. Getriebe-Antriebseinheit (10) nach einem der Ansprüche 1 bis 4, **dadurch gekennzeichnet, dass** die radiale Außenfläche (74) des Sockels (20) eine Dichtfläche bildet.

6. Getriebe-Antriebseinheit (10) nach einem der Ansprüche 1 bis 5, **dadurch gekennzeichnet, dass** das Zahnrad (26) drehbar auf einer Achse (18) gelagert ist.

7. Getriebe-Antriebseinheit (10) nach einem der Ansprüche 1 bis 6, **dadurch gekennzeichnet, dass** das Zahnrad (26) einteilig - insbesondere als Spritzguss-Teil - ausgebildet ist.

8. Getriebe-Antriebseinheit (10) nach einem der Ansprüche 1 bis 7, **dadurch gekennzeichnet, dass** das Zahnrad (26) als ein Mitnehmerelement mit Ausformungen (40) ausgebildet ist, die in entsprechende Gegenausformungen (42) eines Abtriebselements (16, 44) - insbesondere eines Fensterheberantriebs - greifen.

9. Getriebe-Antriebseinheit (10) nach einem der Ansprüche 1 bis 8, **dadurch gekennzeichnet, dass** die Außenverzahnung (30) mindestens über ihren gesamten axialen Bereich (52), der über den Sockel (20) rausragt, in eine Innenverzahnung (31) eines Antriebelements (32, 33) - insbesondere einer Seiltrommel (33) - eingreift.

## Claims

1. Gear drive unit (10) - in particular for adjusting movable parts in the motor vehicle - with at least one gearwheel (26) which has an external toothing (30) and a base (20), the outside diameter (60) of which is larger than the outside diameter (62) of the external toothing (30), **characterized in that** the base (20) has an encircling axial depression (50) into which the external toothing (30) extends.

2. Gear drive unit (10) according to Claim 1, **characterized in that** the external toothing (30) towards the base (20) forms a tapered root portion (56) which, within the depression (50), has a radius connection (66) to the base (20).

3. Gear drive unit (10) according to either of Claims 1 and 2, **characterized in that** the radius connection (66) has a radius (68, 72) which extends in the radial and/or in the circumferential direction.

4. Gear drive unit (10) according to one of Claims 1 to 3, **characterized in that** the radius (68, 72) is greater than the tooth height of the external toothing (30).

5. Gear drive unit (10) according to one of Claims 1 to 4, **characterized in that** the radial outer surface (74) of the base (20) forms a sealing surface.

6. Gear drive unit (10) according to one of Claims 1 to 5, **characterized in that** the gearwheel (26) is mounted rotatably on a spindle (18).

7. Gear drive unit (10) according to one of Claims 1 to 6, **characterized in that** the gearwheel (26) is formed as a single part - in particular as an injection-moulded part.

8. Gear drive unit (10) according to one of Claims 1 to 7, **characterized in that** the gearwheel (26) is designed as a driver element with formations (40) which engage in corresponding mating formations (42) of an output element (16, 44) - in particular of a window lifter drive.

9. Gear drive unit (10) according to one of Claims 1 to 8, **characterized in that** the external toothing (30) engages at least over its entire axial region (52), which protrudes over the base (20), in an internal toothing (31) of a drive element (32, 33) - in particular of a cable drum (33).

## Revendications

1. Unité transmission-entraînement (10) notamment pour actionner des pièces mobiles dans un véhicule automobile, comportant au moins une roue dentée (26) ayant une denture extérieure (30) et un socle (20) dont le diamètre (60) est plus grand que le diamètre extérieur (62) de la denture extérieure (30),
**caractérisée en ce que**
le socle (20) comporte une cavité axiale (50) périphérique dans laquelle s'étend la denture extérieure (30).

2. Unité transmission-entraînement (10) selon la revendication 1,
**caractérisée en ce que**
la denture extérieure (30) forme une fin de base de dent (56) vers le socle (20) qui présente une jonction de rayon (66) avec le socle (20) à l'intérieur de la cavité (50).

3. Unité transmission-entraînement (10) selon la revendication 1 ou 2,
**caractérisée en ce que**
la jonction des rayons (66) correspond à un rayon (68, 72) s'étendant dans la direction radiale et/ ou dans la direction périphérique.

4. Unité transmission-entraînement (10) selon les revendications 1 à 3,
**caractérisée en ce que**
le rayon (68, 72) est plus grand que la hauteur des dents de la denture extérieure (30).

5. Unité transmission-entraînement (10) selon les revendications 1 à 4,
**caractérisée en ce que**
la surface radiale extérieure (74) du socle (20) forme une surface d'étanchéité.

6. Unité transmission-entraînement (10) selon les revendications 1 à 5,
**caractérisée en ce que**
la roue dentée (26) est montée à rotation sur un axe (18).

7. Unité transmission-entraînement (10) selon les revendications 1 à 6,
**caractérisée en ce que**
la roue dentée (26) est réalisée en une seule pièce notamment sous la forme d'une pièce en fonte injectée.

8. Unité transmission-entraînement (10) selon les revendications 1 à 7,
**caractérisée en ce que**
la roue dentée (26) est réalisée comme élément d'entraînement avec des bossages (40) pénétrant dans des formes complémentaires (42) d'un élément de sortie d'entraînement (16, 44) notamment d'un lève-glace.

9. Unité transmission-entraînement (10) selon les revendications 1 à 8,
**caractérisée en ce que**
la denture extérieure (30) pénètre au moins sur toute sa zone axiale (52) qui dépasse du socle (20) dans une denture intérieure (31) d'un élément d'entraînement (32, 33) notamment d'un tambour à câble (33).
